# FASCICULE DE BREVET EUROPEEN

(11) **EP 0 756 985 B1**
(45) Date de publication et mention de la délivrance du brevet: **22.03.2000**
(21) Numéro de dépôt: 96401723.0
(22) Date de dépôt: 02.08.1996
(51) Int. Cl.: B62D 33/04, B62D 33/023

(54) **Brancard inférieur de carrosserie**
Unteres Rahmenprofil für einen Fahrzeugaufbau
Lower frame member for a vehicle body

(30) Priorité: 04.08.1995 FR 9509522
(43) Date de publication de la demande: 05.02.1997
(73) Titulaire: ASCA CARROSSIER CONSTRUCTEUR, F-78680 Epone (FR)
(72) Inventeur: Momper, Jean-Luc, 37640 Villiers-en-Desoeuvre (FR); Deschamp, Roger, 92500 Rueil-Malmaison (FR)
(74) Mandataire: Schrimpf, Robert

(56) Documents cités:
- DE-A- 1 605 931
- DE-A- 4 138 393
- DE-B- 1 268 439
- DE-U- 9 217 216
- DE-U- 9 319 331
- DE-U- 29 500 741
- FR-A- 2 501 309
- US-A- 3 746 388
- US-A- 4 222 606

## Description

L'invention concerne un profilé métallique ("brancard inférieur") pour l'assemblage d'un panneau latéral longitudinal et du plancher de la carrosserie d'un véhicule.

Les publications DE-U-9 217 216 et US-A- 4 222 606 décrivent des profilés d'assemblages comportant deux parois verticales qui déterminent entre elles une feuillure ouverte vers le haut, apte à recevoir le bord inférieur du panneau latéral de la carrosserie, ce profilé comportant une paroi horizontale formant une équerre avec l'une des parois verticales de la feuillure, cette paroi horizontale étant apte à être appliquée contre la face du dessous du plancher de la carrosserie jusqu'à la butée de la tranche du plancher contre la paroi verticale de l'équerre.

Selon ces publications, le profilé est fixé au châssis du véhicule et n'est pas porté par le plancher de la carrosserie, lequel est rapporté sur le châssis indépendamment de la fixation du profilé.

La présente invention vise à fournir un profilé conçu pour permettrel'assemblage du profilé au plancher de la carrosserie, indépendamment du châssis du véhicule, ce qui permet de réaliser la carrosserie avant de rapporter la carrosserie sur le châssis.

Selon l'invention, le profilé tel que défini ci-dessus est caractérisé en ce que ladite paroi horizontale du profilé comporte en sous-face une feuillure horizontale apte à recevoir une pièce métallique servant à la fixation du profilé au plancher de la carrosserie par vissage à travers le plancher et ladite paroi horizontale, en sorte que le panneau soit assemblé au plancher indépendamment du châssis du véhicule.

Le profilé de l'invention présente encore d'autres particularités qui procurent des avantages multiples :
- permettre le collage structural des parties assemblées,
- permettre le démontage par le dessus des éléments de plancher d'épaisseur variable de 19 à 40 mm,
- permettre d'assembler des côtés de 5 à 30 mm d'épaisseur,
- permettre la fixation de bavettes anti-projections latérales soit à l'intérieur, soit à l'extérieur du brancard,
- permettre l'articulation d'une jupe,
- permettre la fixation de pare-cyclistes,
- passer le col de cygne sans diminuer la hauteur du brancard,
- permettre un passage de roue sans découpe,
- permettre de constituer un renfort inférieur de porte latérale,
- permettre d'entailler la joue de brancard pour passage et ouverture d'une porte latérale,
- permettre la fixation des feux de signalisation latéraux,
- permettre la fixation des lisses latérales intérieures,
- permettre la fixation des câblages électriques de signalisation,
- économiser 80 % de main d'oeuvre.

On décrira ci-après un exemple de réalisation non limitatif du profilé de l'invention, en référence aux figures du dessin joint, la description et les figures faisant apparaître d'autres caractéristiques de l'invention.

Sur les figures :
- la fig. 1 est une coupe verticale du profilé supposé en position de service,
- la fig. 2 est une vue de détails,
- la fig. 3 est une coupe verticale du profilé en position de service dans des conditions différentes de celles de la fig. 1,
- la fig. 4 est une coupe verticale du profilé utilisé avec une lisse auxiliaire selon une variante, et
- la fig. 5 est une coupe verticale du profilé utilisé avec une jupe.

Le profilé représenté sur les figures est un élément longitudinal en alliage d'aluminium dont la longueur correspond sensiblement à celle de la carrosserie et qui a en largeur le profil représenté sur les figures.

Le profilé présente deux parois verticales (1,2) qui déterminent entre elles une feuillure (3) ouverte vers le haut, pour recevoir le bord inférieur d'un panneau longitudinal (4) de la carrosserie, et une paroi horizontale (5) formant une équerre avec l'une (2) des parois verticales de la feuillure, cette paroi horizontale étant apte à être appliquée contre la face de dessous (6) du plancher (P), jusqu'à la butée de la tranche (7) du plancher contre la paroi verticale (2) de l'équerre, ladite paroi horizontale comportant en sous face une feuillure horizontale (8) apte à recevoir un plat métallique (9) servant à la fixation du plancher par vissage (10) à travers le plancher, ladite paroi horizontale et ledit plat.

La paroi verticale (2) de l'équerre est conformée en gradins du côté de la feuillure.

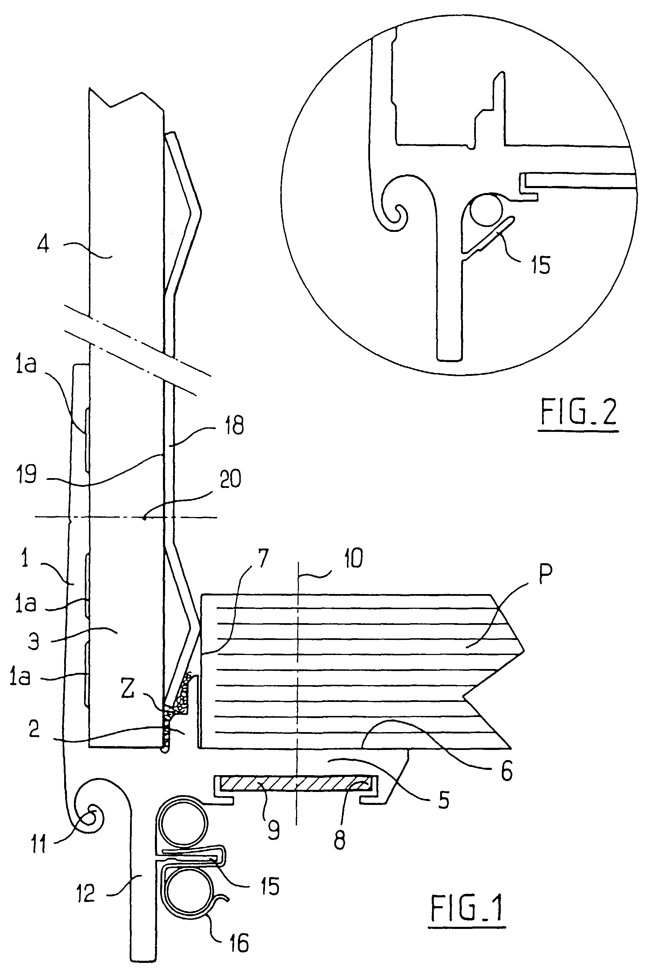

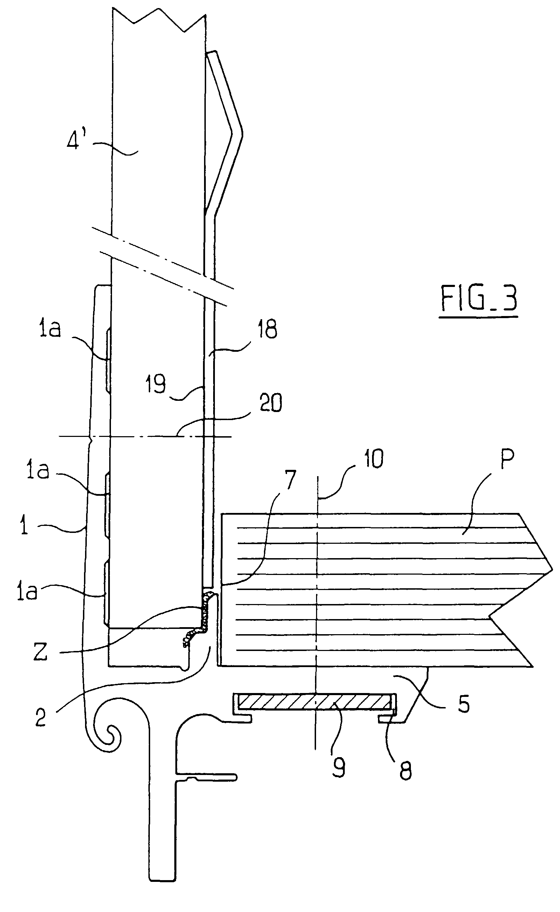

Cette particularité permet à la feuillure de recevoir des panneaux de carrosserie (4,4') d'épaisseurs variées (figs. 1 et 3) et qui portent sur le fond de la feuillure (fig. 1) ou sur un gradin (fig. 3).

Avantageusement la paroi verticale 1 qui borde extérieurement la feuillure comporte sur sa face interne des réserves (1a) qui seront encollés avant l'introduction du panneau (4) dans la feuillure. Un cordon de colle (Z) est également appliqué contre la face interne de l'autre paroi 2.

Selon une autre caractéristique de l'invention, la paroi verticale (1) qui borde extérieurement la feuillure se prolonge vers le bas pour se terminer par une extrémité (11) recourbée vers le haut en face d'une paroi verticale (12) située sous la feuillure et dirigée vers le bas.

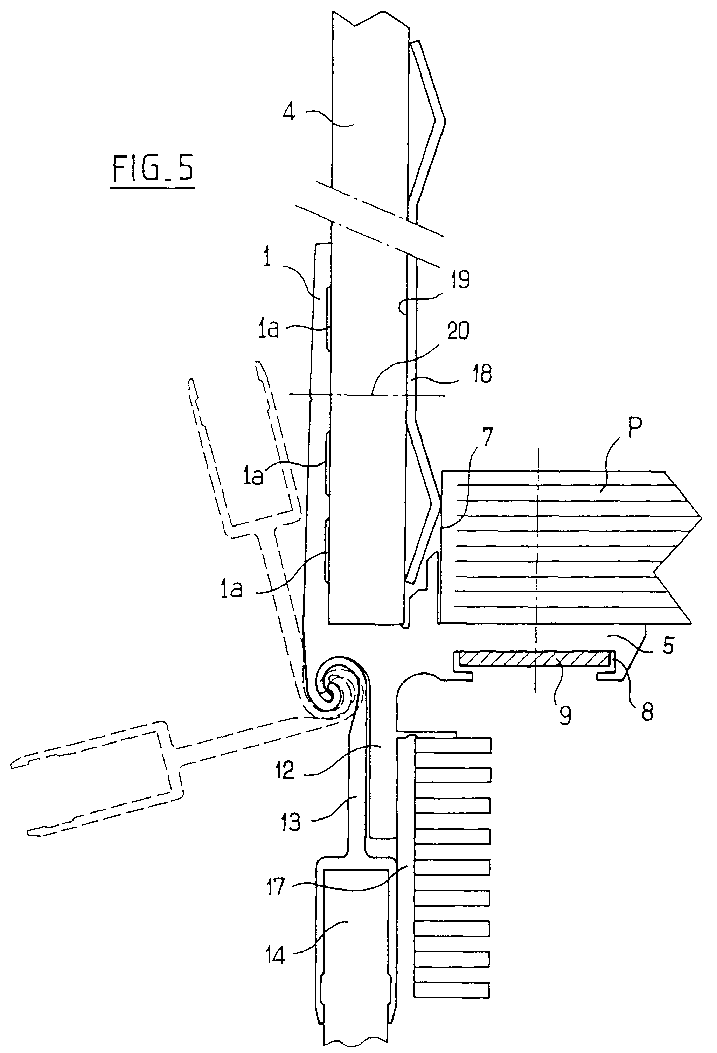

Cette extrémité recourbée permet d'accrocher sous le brancard un profilé auxiliaire (13) auquel peut être fixée une jupe (14) et qui peut être facilement soulevé à la demande (fig. 5), l'extrémité recourbé (11) fonctionnant comme un pivot horizontal.

Selon une autre particularité de l'invention, ladite paroi verticale (12) dirigée vers le bas et située sous la feuillure présente une corniche (15) dirigée vers le dessous du plancher.

Cette corniche (15) permet par exemple de fixer des clips 15 pour tenir des tubes (16) servant de gaines à des conducteurs (fig.1) ou peut être pliée vers le haut pour coincer un tube (fig. 2).

Un bandeau anti-projection 17 peut être vissé 18 à la paroi verticale descendante 12 (fig. 5).

Selon l'invention, il est préconisé de compléter l'assemblage par des lisses.

Selon des réalisations (fig. 1, 3, 5), on utilise une lisse (18) appliquée contre la face interne (19) du panneau (4) de la carrosserie, cette lisse présentant un bord inférieur introduit entre la tranche (7) du plancher et la face interne (19) du dit panneau (4) de la carrosserie, et étant vissée (20) à ce panneau et à la paroi verticale (1) qui borde extérieurement ladite feuillure.

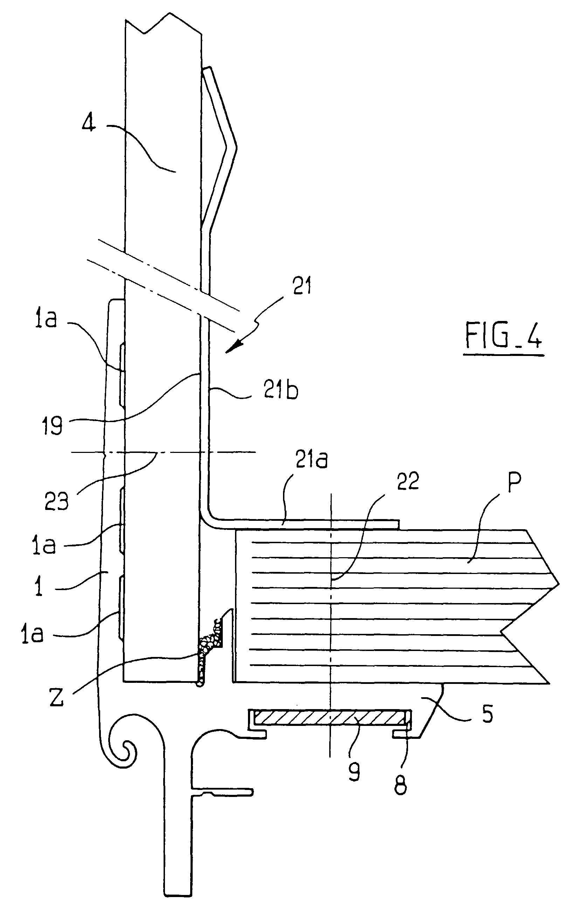

Selon une variante (fig 4) , on utilise une lisse en forme de L, cette lisse comportant une paroi horizontale (21a) appliquée sur le plancher P et fixé à lui par vissage (22) et une paroi verticale (21b) appliquée contre la face interne du panneau (4) de la carrosserie et vissé (23) à ce montant et à la paroi verticale (1) qui borde extérieurement la feuillure.

Les vis (20 et 23) sont mises en place à partir de la face externe de la paroi 1.

L'invention s'applique notamment aux carrosseries des fourgons et autres véhicules utilitaires.

## Revendications

1. Profilé métallique pour recevoir le bord inférieur d'un panneau latéral longitudinal d'une carrosserie de véhicule comportant un plancher, ce profilé comportant deux parois verticales (1,2) qui déterminent entre elles une feuillure (3) ouverte vers le haut, apte à recevoir le bord inférieur du dit panneau (4) de la carrosserie, et ledit profilé comportant une paroi horizontale (5) formant une équerre avec l'une (2) des parois verticales de la feuillure, cette paroi horizontale étant apte à être appliquée contre la face de dessous (6) du plancher (P) de la carrosserie jusqu'à la butée de la tranche (7) du plancher contre la paroi verticale (2) de l'équerre, caractérisé en ce que ladite paroi horizontale (5) comporte en sous face une feuillure horizontale (8) apte à recevoir une pièce métallique (9) servant à la fixation du profilé au plancher de la carrosserie par vissage à travers le plancher et ladite paroi horizontale, en sorte que le panneau soit assemblé au plancher indépendamment du châssis du véhicule.

2. Profilé selon la revendication 1, dans lequel ladite paroi verticale (2) de l'équerre est conformée en gradins du côté de la feuillure (3).

3. Profilé selon la revendication 1 ou 2, dans lequel la paroi verticale (1) qui borde extérieurement la feuillure se prolonge vers le bas pour se terminer par une extrémité (11) recourbée vers le haut en face d'une paroi verticale (12) située sous la feuillure et dirigée vers le bas.

4. Profilé selon la revendication 2, dans lequel ladite paroi verticale (12) dirigée vers le bas et située sous la feuillure présente une corniche (15) dirigée vers le dessous du plancher.

5. Profilé selon l'une des revendications 1 à 4 et qui comporte sur la face interne de la paroi verticale (1) qui borde extérieurement la feuillure des réserves (1a) destinées à être encollées avant l'introduction du panneau dans la feuillure.

6. Dispositif d'assemblage utilisant un profilé selon l'une des revendications 1 à 5 et qui comporte une lisse (18) appliquée contre la face interne (19) du panneau de la carrosserie, cette lisse présentant un bord introduit entre la tranche (7) du plancher et la face interne (19) du dit panneau (4) de la carrosserie, et étant vissée (20) à ce panneau et à la paroi verticale (1) qui borde extérieurement ladite feuillure (3) par des vis mises en place à partir de la face externe de la paroi (1) qui borde extérieurement la feuillure.

7. Dispositif d'assemblage utilisant un profilé selon l'une des revendications 1 à 5 et qui comporte une lisse (21) en forme de L, cette lisse comportant une paroi horizontale (21a) appliquée sur le plancher (P) et fixé à lui par vissage (22) et une paroi verticale (21b) appliquée contre la face interne (19) du panneau de la carrosserie et vissée (23) à ce panneau et à la paroi verticale (1) qui borde extérieurement la feuillure par des vis mises en place à partir de la face externe de la paroi (1) qui borde extérieurement la feuillure.

8. Carrosserie de véhicule comportant des panneaux latéraux et un plancher, caractérisée en ce que les panneaux latéraux sont fixés au plancher par des profilés selon l'une des revendications 1 à 5.

## Patentansprüche

1. Metallisches Profil zur Aufnahme der Unterkante einer länglichen Seitenblende einer Fahrzeugkarosserie mit einem Boden, wobei dieses Profil zwei vertikale Wände (1,2) aufweist, welche zwischen sich eine nach oben hin offene Falz (3) bestimmen, welche geeignet ist, die Unterkante der Blende (4) der Karosserie aufzunehmen, und wobei dieses Profil eine horizontale Wand (5) aufweist, welche mit der einen (2) der vertikalen Wände der Falz einen Winkel bildet, wobei diese horizontale Wand geeignet ist, an der Unterseite des Bodens (P) der Karosserie bis zum Anschlag des Randes (7) des Bodens gegen die vertikale Wand (2) des Winkels befestigt zu werden, dadurch gekennzeichnet, daß die horizontale Wand (5) auf ihrer Unterseite eine horizontale Falz (8) aufweist, welche geeignet ist, ein metallisches Teil (9) aufzunehmen, welches der Befestigung des Profils an dem Boden der Karosserie durch Verschraubung quer durch den Boden und die horizontale Wand dient, so daß die Blende unabhängig von dem Rahmen des Fahrzeugs mit dem Boden zusammengefügt wird.

2. Profil gemäß Anspruch 1, bei welchem die vertikale Wand (2) des Winkels stufenweise auf der Seite der Falz (3) ausgebildet ist.

3. Profil gemäß Anspruch 1 oder 2, bei welchem sich die vertikale Wand (1), welche die Falz von außen einfaßt, nach unten verlängert, um in einem nach oben gebogenen Ende (11) gegenüber einer vertikalen Wand (12) zu enden, welche unter der Falz angeordnet und nach unten gerichtet ist.

4. Profil gemäß Anspruch 2, bei welchem die nach unten gerichtete und unter der Falz angeordnete, vertikale Wand (12) ein Gesims (15) aufweist, welches zu der Unterseite des Bodens hin gerichtet ist.

5. Profil gemäß einem der Ansprüche 1 bis 4, welches auf der Innenseite der vertikalen Wand (1), welche die Falz von außen einfaßt, Reserven (1a) aufweist, welche dafür bestimmt sind, vor dem Einfügen der Blende in die Falz mit Leim bestrichen zu werden.

6. Verbindungsvorrichtung, welche ein Profil gemäß einem der Ansprüche 1 bis 5 verwendet, und welche eine Leiste (18) aufweist, welche an der Innenfläche (19) der Blende der Karosserie befestigt ist, wobei diese Leiste eine Kante aufweist, welche zwischen den Rand (7) des Bodens und der Innenseite (19) der Blende (4) der Karosserie eingeschoben ist, und sie an dieser Blende und an der vertikalen Wand (1), welche die Falz (3) von außen einfaßt, durch Schrauben verschraubt ist (20), welche von der Außenfläche der Wand (1), welche die Falz (3) von außen einfaßt, angeordnet sind.

7. Verbindungsvorrichtung, welche ein Profil gemäß einem der Ansprüche 1 bis 5 verwendet, und welche eine Leiste (21) in L-Form aufweist, wobei diese Leiste eine horizontale Wand (21a), welche auf dem Boden (P) aufliegt und an ihm durch Verschraubung (22) befestigt ist, und eine vertikale Wand (21b) aufweist, welche gegen die Innenfläche (19) der Blende der Karosserie anliegt und an dieser Blende und an der vertikalen Wand (1), welche die Falz von außen einfaßt, durch Schrauben verschraubt ist (23), welche von der Außenfläche der Wand (1), welche die Falz von außen einfaßt, angeordnet sind.

8. Fahrzeugkarosserie mit Seitenblenden und einem Boden, dadurch gekennzeichnet, daß die Seitenblenden an dem Boden durch Profile gemäß einem der Ansprüche 1 bis 5 befestigt sind.

## Claims

1. Metal profile to receive the lower edge of a longitudinal side panel of the bodywork of a vehicle comprising a floor, this profile having two vertical walls (1, 2) which between them determine a rebate (3) which is open at the top, capable of receiving the lower edge of the said panel (4) of the bodywork, and the said profile having a horizontal wall (5) forming an angle bracket with one (2) of the vertical walls of the rebate, this horizontal wall being able to press against the underside (6) of the floor (P) of the bodywork until the edge (7) of the floor comes up against the vertical wall (2) of the angle bracket, characterized in that the said horizontal wall (5) on its underside has a horizontal rebate (8) capable of receiving a metal component (9) used to secure the profile to the floor of the bodywork by screwing through the floor and through the said horizontal wall so that the panel is assembled with the floor independently of the chassis of the vehicle.

2. Profile according to Claim 1, in which the said vertical wall (2) of the angle bracket is shaped with steps on the same side as the rebate (3).

3. Profile according to Claim 1 or 2, in which the vertical wall (1) which externally borders the rebate is extended downwards to terminate in a curled-up end (11) facing a downwardly pointing vertical wall (12) located under the rebate.

4. Profile according to Claim 2, in which the said downwardly pointing vertical wall (12) located under the rebate has a ledge (15) pointing towards the underside of the floor.

5. Profile according to one of Claims 1 to 4 and which comprises, on the internal face of the vertical wall (1) externally bordering the rebate, recesses (la) which are intended to be coated with glue before the panel is introduced into the rebate.

6. Assembly device employing a profile according to one of Claims 1 to 5 and which comprises a rail (18) pressed against the internal face (19) of the bodywork panel, this rail having an edge inserted between the edge face (7) of the floor and the internal face (19) of the said bodywork panel (4), and being screwed (20) to this panel and to the vertical wall (1) externally bordering the said rebate (3) by screws screwed in from the external face of the wall (1) externally bordering the rebate.

7. Assembly device using a profile according to one of Claims 1 to 5 and which comprises an L-shaped rail (21), this rail having a horizontal wall (21a) pressed against the floor (P) and fixed to it by screwing (22) and a vertical wall (21b) pressed against the internal face (19) of the bodywork panel and screwed (23) to this panel and to the vertical wall (1) externally bordering the rebate by screws screwed in from the external face of the wall (1) externally bordering the rebate.

8. Vehicle bodywork comprising side panels and a floor, characterized in that the side panels are fixed to the floor by profiles according to one of Claims 1 to 5.
